(19) Europäisches Patentamt
European Patent Office
Office européen des brevets

(11) EP 1 674 490 A1

(12) EUROPEAN PATENT APPLICATION

(43) Date of publication:
28.06.2006 Bulletin 2006/26

(51) Int Cl.:
*C08F 297/08* (2006.01) *C08F 297/06* (2006.01)
*C08F 210/16* (2006.01) *C08L 23/08* (2006.01)

(21) Application number: 04258117.3

(22) Date of filing: 23.12.2004

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(71) Applicant: **Borealis Technology Oy**
**06101 Porvoo (FI)**

(72) Inventors:
- **Lehtinen, Arja**
  **3960 Stathelle (NO)**
- **Skar, Merete**
  **3960 Stathelle (NO)**
- **Pohler, Holger**
  **3960 Stathelle (NO)**
- **Krajete, Alexander**
  **3960 Stathelle (NO)**
- **Lindroos, Jarmo**
  **06101 Porvoo (FI)**
- **Maaranen, Janne**
  **06101 Porvoo (FI)**
- **Vahteri, Markku**
  **06101 Porvoo (FI)**
- **Eklind, Hans**
  **SE44486 Stenungsund (SE)**

(74) Representative: **Campbell, Neil Boyd**
**Frank B. Dehn & Co.**
**St Bride's House**
**10 Salisbury Square**
**London EC4Y 8JD (GB)**

# (54) Copolymer

(57) A multimodal copolymer of ethylene comprising at least

(i) a lower molecular weight fraction of a copolymer of ethylene and at least one alpha-olefin comonomer and

(ii) a higher molecular weight fraction of a copolymer of ethylene and at least one alpha-olefin comonomer, wherein said copolymer has a density below 920 kg/m$^3$.

EP 1 674 490 A1

## Description

This invention relates to a polyethylene copolymer having very low density (VLDPE), to the preparation thereof and to the use thereof in various applications, such as film, e.g. blown or cast films, as well as mono- or multilayer films, in extrusion coated (EC) substrates, including mono- and multilayer EC substrates, and in injection moulded articles.

Polymers used in, for example, extrusion coating and in the manufacture of films need to possess certain properties to make them useful as coatings/films. For example, they should exhibit good sealing properties. They must also possess the requisite mechanical properties and hot tack.

In this regard low density polyethylenes (LDPE's) do not possess the ideal mechanical properties required by an extrusion coating or polymer film since they lack the necessary toughness and abuse resistance. It is known therefore to blend LDPE's with other polymer grades to improve mechanical properties.

Hence LDPE has previously been combined with higher density polyethylenes, e.g. medium or high density polyethylene or linear low density polyethylenes (LLDPE) to improve mechanical properties. For example, a small amount of LDPE (5 to 30 wt%) can be added to LLDPE to improve processability. However, when the content of LDPE increases in the composition, then the beneficial properties of the linear polymer, e.g. improved environmental stress cracking resistance, barrier properties and sealing properties, are soon diluted or lost. On the other hand, if the LDPE content is too low then the blend may not have sufficient processability. The problem with such low LDPE content blends is that whilst they have better processability than an LLDPE alone, they may not be extrudable or drawn down at high take-off rates. There is therefore a trade off between good mechanical properties and good processability.

Linear low density polyethylene (LLDPE) and ultra low density polyethylene (ULDPE) extrusion compositions, conventionally made using Ziegler-Natta catalysis, offer improved mechanical properties but again are difficult to process due to lack of extrudability.

There remains a need therefore to devise further polyethylene polymer compositions suitable for extrusion coating and film formation which provide good mechanical and processing properties.

WO01/62847 proposes using a bimodal polyethylene composition made using a single site catalyst in a multistage process as a replacement for LDPE. The composition can be used as an extrusion coating as such or mixed with minor amounts of LDPE prior to extrusion. WO01/62847 generally describes polymers with density of 915-960 kg/$m^3$. In its examples however, all polymers have densities over 924 kg/$m^3$, the majority over 930 kg/$m^3$. Thus, no specific polymer compositions with densities below 920 kg/$m^3$ are disclosed.

Accordingly, the bimodal polymers produced therein still have relatively high densities and are not therefore ideal replacement for LDPE's. It would be beneficial if even lower density bimodal polyethylene copolymers could be provided to act as ideal replacements for LDPE's. Such copolymers may also possess good sealing properties.

It is generally known that the production of a multimodal very low density polyethylene (VLDPE) using a Ziegler-Natta catalyst is difficult if not impossible to achieve. It is also challenging to produce a multimodal VLDPE using a single site catalyst. It is theoretically possible to form a multimodal VLDPE by mechanical blending of at least two polymer components, i.e. lower molecular weight (LMW) component and higher molecular weight (HMW) component or by forming the necessary components *in situ* e.g. in a multistage process. However, due to the substantial differences in density and potentially $MFR_2$ between the polymer components, the blends are expected to be inhomogeneous due to severe compatibility problems between the components.

A further problem encountered when manufacturing such low density polymers is reactor fouling. The low density component of such a bimodal species has very low crystallinity which was thought to lead to reactor fouling particularly in the gas phase. Fouling was thought to occur when either Ziegler-Natta or single site catalysis was employed.

Polymers are employed in a wide variety of applications each making different demands on the polymer. Further tailored polymers are needed to meet growing requirements of end use applications.

The problem to be solved by the present invention lies in the provision of further tailored polymer compositions, particularly VLDPE compositions, which can be used in various end applications, where polymer materials with low or very low density are desired.

Accordingly, a multimodal copolymer of ethylene (herein referred generally as the VLDPE composition) is provided, which comprises at least (i) a LMW fraction of a copolymer of ethylene and at least one alpha-olefin comonomer and (ii) a HMW fraction of a copolymer of ethylene and at least one alpha-olefin comonomer, wherein the VLDPE composition has a density below 920 kg/$m^3$. The obtained VLDPE product has good flowability properties.

The term "VLDPE composition" as used herein means the composition of the invention, as described above with the given density limit. The present invention may also provide a VLDPE polymer composition comprising a LMW fraction and a HMW fraction with differing densities and, preferably, with differing $MFR_2$ values which are compatible, i.e. are homogeneous when blended.

The VLDPE product of the invention may also have, inter alia, improved sealing properties which may be very advantageous in certain end applications, e.g. in extrusion coating (EC) or film applications.

The VLDPE composition may comprise further polymer fractions in addition to fractions (i) and (ii). Accordingly,

the VLDPE composition is multimodal e.g. bimodal, i.e. its molecular weight profile does not comprise a single peak but instead comprises the combination of two or more peaks, which may or may not be distinguishable and which are centred about different average molecular weights as a result of the fact that the polymer composition comprises two or more separately produced components. In one embodiment the VLDPE composition is bimodal and consists of the fractions (i) and (ii).

The VLDPE composition can be used in different end applications, and due to its good sealing properties and/or processability it is suitable for film applications including cast and blown films as well as monolayer and multilayer films, extrusion coating (EC) applications including monolayer and multilayer EC, and for injection moulding applications, preferably for film and EC applications.

The VLDPE composition of the invention has a novel compositional structure and the advantage that the other properties of the present multimodal VLDPE composition can be tailored within said density limit of below 920 kg/m$^3$ depending on the desired end use application.

In a preferred embodiment of the present invention the VLDPE composition has a relatively narrow molecular weight distribution (MWD) and excellent sealing properties, good processability and a low level of extractibles. The MWD is preferably 2.5 to 10, especially 3.0 to 6.0 whereby good processability of the VLDPE is achieved.

The weight average molecular weight of the multimodal, e.g. bimodal polymer is preferably between 50,000 and 250,000 g/mol. The lower molecular weight polymer fraction preferably has a weight average molecular weight of 5000 to 100,000 g/mol, more preferably of 10,000 to 70,000 g/mol and the higher molecular weight polymer fraction preferably has a weight average molecular weight preferably of 50,000 to 500,000 g/mol, more preferably of 100,000 to 300,000 g/mol.

The molecular weight distribution of the polymer is further characterized by the way of its melt flow rate ($MFR_2$) according to ISO 1133 at 190°C at a load of 2.16 kg. The final multimodal, e.g. bimodal polymer preferably has a melt flow rate $MFR_2$ of 0.01 to 30 g/10min, more preferably of 0.5 to 20 g/10min such as 0.8 to 15 g/10min and typically <5, e.g. 2 to 5 g/10 min for cast film and ≤ 2 g/10min for blown film. Preferably, when the polymer is used in extrusion coating the $MFR_2$ is 5 to 20 g/10min and when it is used in film it is 0.1 to 2 g/10 min.

The lower molecular weight polymer fraction preferably has a $MFR_2$ of 1 to 300 g/10min, more preferably 50 to 200 g/10min, such as 80 to 150 g/10min.

The density of the formed polymer is less than 920 kg/m$^3$, such as less than 918 kg/m$^3$, preferably less than 915 kg/m$^3$, such as 914 kg/m$^3$ or less. A density of 912 kg/m$^3$ or less may be preferable in some applications.

The density of the VLDPE composition is preferably at least 905 kg/m$^3$.

The density of the lower molecular weight polymer fraction is typically 915 to 950 kg/m$^3$, preferably 920 to 950 kg/m$^3$, such as 925 to 945 kg/m$^3$. For some applications 940 kg/m$^3$ may be desired.

The density of the higher molecular weight component polymer fraction is typically 870 to 910 kg/m$^3$, preferably 870 to 900 kg/m$^3$, more preferably 880 to 900 kg/m$^3$, e.g. 885 to 900 kg/m$^3$. The lower molecular weight component should have a higher density than the higher molecular weight component, e.g. at least 20 kg/m$^3$ higher, preferably 30 kg/m$^3$higher.

The weight ratio (i.e. production split) of LMW fraction (i) to HMW fraction (ii) is preferably 30:70 to 70:30, preferably 40:60 to 60:40, e.g. 45:55 to 55:45.

The overall comonomer content in the VLDPE composition is preferably 0.5 to 10 mol%, preferably 1.5 to 6.5 mol%, more preferably 2 to 5 mol% and in the lower molecular weight polymer the comonomer content is preferably from 0.1 to 2.0 mol%, preferably 0.5 to 1.5 mol%. In the higher molecular weight polymer the comonomer content is preferably 1.5 to 8 mol%, preferably 3.5 to 6 mol%. Comonomer contents may be measured by NMR.

The melting point of the polymer may be between 100 to 130°C, preferably 110 to 120°C.

The invention also provides a process for preparing the VLDPE composition of the invention, wherein (a) the LMW fraction (i) is produced by polymerising ethylene with at least one alpha-olefin comonomer in the presence of a polymerisation catalyst and (b) the HMW fraction (ii) is produced by polymerising ethylene with at least one alpha-olefin comonomer in the presence of a polymerisation catalyst, to obtain the VLDPE composition having density of less than 920 kg/m$^3$, and optionally extruding the obtained composition to form polymer pellets.

Preferably, in said process the VLDPE composition as defined above including the preferred embodiments thereof is prepared.

The polymerisation process may comprise further polymerisation steps to produce further polymer fractions, e.g. a prepolymerisation step, in a known manner.

The density and $MFR_2$ of each fraction can be controlled by adjusting the process conditions, e.g. by adjusting one or more of the following: the ethylene feed, hydrogen feed, comonomer feed and the production split between the fractions in a conventional manner.

In principle, the VLDPE composition of the invention may be produced by any feasible polymerization and blending process. However, the applicant has found that the VLDPE composition of the invention can be favourably prepared as an in situ blend in a multistage polymerisation process. Whilst the stages of the process can be carried out

using any known polymerisation method, such as suspension, slurry, solution or gas phase polymerisation in one or more reactors, it is preferred if the process involves a slurry and/or gas phase polymerisation process, preferably in at least two stages in the same or different reactor.

According to one preferable embodiment the polymerisation of the LMW and HMW fractions is carried out in at least two stages in different reactors, typically in series, the components being prepared in any order.

In a preferable embodiment of the invention the LMW fraction is produced first and the HMW fraction is produced in the presence of LMW fraction.

The multistage process can, for example be a slurry-slurry or a gas phase-gas phase process, particularly preferably a slurry-gas phase process. The slurry process may involve the use of known slurry tank reactors or loop reactors, in a suitable diluent or as a bulk process. The slurry and gas phase processes are well known and described in the prior art.

Most preferably, the VLDPE composition of the invention is produced in a multistage process comprising a loop reactor and a gas phase reactor, whereby the LMW fraction of the VLDPE composition is first produced in the loop reactor and the HMW fraction is produced in the gas phase reactor in the presence of the LMW fraction. This type of process is developed by Borealis A/S, Denmark and known in the art as BORSTAR® technology. This process enables the production of LMW and HMW fractions with substantially differing densities and allows tailoring of the other polymer properties, i.e. the preferred process is especially advantageous for producing in situ blends with low density. Due to the loop-gas phase arrangement it is possible to produce in the loop a LMW fraction with low density and preferably with high $MFR_2$.

The VLDPE composition of the invention can be produced using any suitable catalyst, e.g. a coordination catalyst.

The ethylene polymers of the invention are thus preferably produced using a single site catalyst, e.g. a catalyst comprising a metal coordinated by one or more η-bonding ligands. Such η-bonded metals are normally referred to as metallocenes and the metals are typically Zr, Hf or Ti, especially Zr or Hf. The η-bonding ligand is typically an $\eta^5$-cyclic ligand, i.e. a homo or heterocyclic cyclopentadienyl group optionally with fused or pendant substituents. Such metallocene procatalysts have been widely described in the scientific and patent literature for about twenty years. Such metallocene procatalysts are frequently used with catalyst activators or co-catalysts, e.g. alumoxanes such as methylaluminoxane, again as widely described in the literature.

The metallocene procatalyst may have a formula II:

$$(Cp)_m R_n M X_q \qquad \text{(II)}$$

wherein:

each Cp independently is an unsubstituted or substituted and/or fused homo- or heterocyclopentadienyl ligand, e.g. substituted or unsubstituted cyclopentadienyl, substituted or unsubstituted indenyl or substituted or unsubstituted fluorenyl ligand; the optional one or more substituent(s) being independently selected preferably from halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, - $SiR''_3$, $-OSiR''_3$, -SR", $-PR''_2$ or $-NR''_2$, each R" is independently a hydrogen or hydrocarbyl, e.g. C1-C20-alkyl, C2-C20-alkenyl, C2-C20-alkynyl, C3-C12-cycloalkyl or C6-C20-aryl; or e.g. in case of $-NR''_2$, the two substituents R" can form a ring, e.g. five- or six-membered ring, together with the nitrogen atom wherein they are attached to;

R is a bridge of 1-7 atoms, e.g. a bridge of 1-4 C-atoms and 0-4 heteroatoms, wherein the heteroatom(s) can be e.g. Si, Ge and/or O atom(s), whereby each of the bridge atoms may bear independently substituents, such as C1-C20-alkyl, tri(C1-C20-alkyl)silyl, tri(C1-C20-alkyl)siloxy or C6-C20-aryl substituents); or a bridge of 1-3, e.g. one or two, hetero atoms, such as silicon, germanium and/or oxygen atom(s), e.g. $-SiR^1_2-$, wherein each $R^1$ is independently C1-C20-alkyl, C6-C20-aryl or tri(C1-C20-alkyl)silyl- residue, such as trimethylsilyl;

M is a transition metal of Group 3 to 10, preferably of Group 4 to 6, such as Group 4, e.g. Ti, Zr or Hf, especially Hf;

each X is independently a sigma-ligand, such as H, halogen, C1-C20-alkyl, C1-C20-alkoxy, C2-C20-alkenyl, C2-C20-alkynyl, C3-C12-cycloalkyl, C6-C20-aryl, C6-C20-aryloxy, C7-C20-arylalkyl, C7-C20-arylalkenyl, -SR", - $PR''_3$, $-SiR''_3$, $-OSiR''_3$, $-NR''_2$ or $-CH_2-Y$, wherein Y is C6-C20-aryl, C6-C20-heteroaryl, C1-C20-alkoxy, C6-C20-aryloxy, $NR''_2$, -SR", $-PR''_3$, $-SiR''_3$, or $-OSiR''_3$;

each of the above mentioned ring moieties alone or as a part of another moiety as the substituent for Cp, X, R" or $R^1$ can further be substituted e.g. with C1-C20-alkyl which may contain Si and/or O atoms;

n is 0, 1 or 2, e.g. 0 or 1,

m is 1, 2 or 3, e.g. 1 or 2,

q is 1, 2 or 3, e.g. 2 or 3,

wherein m+q is equal to the valency of M.

Suitably, in each X as $-CH_2-Y$, each Y is independently selected from C6-C20-aryl, $NR''_2$, $-SiR''_3$ or $-OSiR''_3$. Most preferably, X as $-CH_2-Y$ is benzyl. Each X other than $-CH_2-Y$ is independently halogen, C1-C20-alkyl, C1-C20-alkoxy, C6-C20-aryl, C7-C20-arylalkenyl or $-NR''_2$ as defined above, e.g. $-N(C1\text{-}C20\text{-alkyl})_2$.

Preferably, q is 2, each X is halogen or $-CH_2-Y$, and each Y is independently as defined above.

Cp is preferably cyclopentadienyl, indenyl, tetrahydroindenyl or fluorenyl, optionally substituted as defined above and may further bear a fused ring of 3 to 7 atoms, e.g. 4, 5 or 6, which ring may be aromatic or partially saturated.

In a suitable subgroup of the compounds of formula II, each Cp independently bears 1, 2, 3 or 4 substituents as defined above, preferably 1, 2 or 3, such as 1 or 2 substituents, which are preferably selected from C1-C20-alkyl, C6-C20-aryl, C7-C20-arylalkyl (wherein the aryl ring alone or as a part of a further moiety may further be substituted as indicated above), $-OSiR''_3$, wherein R" is as indicated above, preferably C1-C20-alkyl.

R, if present, is preferably a methylene, ethylene or a silyl bridge, whereby the silyl can be substituted as defined above, e.g. a (dimethyl)Si=, (methylphenyl)Si= or (trimethylsilylmethyl)Si=; n is 0 or 1; m is 2 and q is two. Preferably, R" is other than hydrogen.

A specific subgroup includes the well known metallocenes of Zr, Hf and Ti with two $eta^5$-ligands which may be bridged or unbridged cyclopentadienyl ligands optionally substituted with e.g. siloxy, or alkyl (e.g. C1-6-alkyl) as defined above, or with two unbridged or bridged indenyl ligands optionally substituted in any of the ring moieties with e.g. siloxy or alkyl as defined above, e.g. at 2-, 3-, 4- and/or 7-positions. Preferred bridges are ethylene or $-SiMe_2$.

The preparation of the metallocenes can be carried out according or analogously to the methods known from the literature and is within skills of a person skilled in the field. Thus for the preparation see e.g. EP-A-129 368, examples of compounds wherein the metal atom bears a $-NR''_2$ ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

Alternatively, in a further subgroup of the metallocene compounds, the metal bears a Cp group as defined above and additionally a $eta^1$ or $eta^2$ ligand, wherein said ligands may or may not be bridged to each other. Such compounds are described e.g. in WO-A-9613529, the contents of which are incorporated herein by reference.

Highly preferred metallocene procatalysts are those listed in the examples.

Further preferred metallocenes include those of formula (I)

$$Cp'_2HfX'_2$$

wherein each X' is halogen, $C_{1-6}$ alkyl, benzyl or hydrogen;

Cp' is a cyclopentadienyl or indenyl group optionally substituted by a $C_{1-10}$ hydrocarbyl group or groups and being optionally bridged, e.g. via an ethylene or dimethylsilyl link. Bis (n-butylcyclopentadienyl) hafnium dichloride and Bis (n-butylcyclopentadienyl) hafnium dibenzyl are particularly preferred.

Metallocene procatalysts are generally used as part of a catalyst system which also includes a cocatalyst or catalyst activator, for example, an aluminoxane (e.g. methylaluminoxane (MAO), hexaisobutylaluminoxane and tetraisobutylaluminoxane) or a boron compound (e.g. a fluoroboron compound such as triphenylpentafluoroboron or triphentylcarbenium tetraphenylpentafluoroborate ($(C_6H_5)_3B^+B^-(C_6F_5)_4$)). The preparation of such catalyst systems is well known in the field.

If desired the procatalyst, procatalyst/cocatalyst mixture or a procatalyst/cocatalyst reaction product may be used in unsupported form or it may be precipitated and used as such. However the metallocene procatalyst or its reaction product with the cocatalyst is preferably introduced into the polymerization reactor in supported form, e.g. impregnated into a porous particulate support as is well known in the art.

The support is preferably a metal or pseudo metal oxide such as silica, alumina or zirconia or a mixed oxide such as silica-alumina, in particular silica, alumina or silica-alumina.

It has also been surprisingly found that by using single site catalysis in a multistage polymerisation, a multimodal polyethylene copolymer composition can be formed having very low density without any reactor fouling. Moreover, the high and low molecular weight components of the formed polymers are miscible and the polymer exhibits very low levels of gels.

Thus in a preferred embodiment, the invention provides a process for the preparation of a polyethylene copolymer, e.g. with at least one $C_{4-10}$-alpha olefin comprising:

(I) in a first stage polymerising ethylene and at least one $C_{4-10}$-alpha olefin in the presence of a single site catalyst in the slurry phase so as to form a lower molecular weight component;
transferring the resulting reaction mixture to a gas phase reactor and;

(II) polymerising ethylene and at least one $C_{4-10}$-alpha olefin in the gas phase to form higher molecular weight

component;

so as to yield a multimodal polyethylene copolymer having a density of less than 920 $kg/m^3$, preferably less than 915 $kg/m^3$.

The VLDPE polymer formed by the process of the invention is multimodal, e.g. bimodal. This can result from the process of the invention which involves the two separate polymerisation stages preferably a slurry polymerization, e.g. in a loop reactor, followed by a gas phase polymerization in a gas phase reactor.

The lower molecular weight polymer fraction is preferably produced in the slurry phase, e.g. in a continuously operating loop reactor where ethylene is polymerized in the presence of a polymerization catalyst as stated above and optionally a chain transfer agent such as hydrogen. The diluent is typically an inert aliphatic hydrocarbon, preferably isobutane or propane. For slurry reactors, the reaction temperature will generally be in the range 60 to 110°C (e.g. 85-110°C), the reactor pressure will generally be in the range 5 to 80 bar (e.g. 50-70 bar, preferably 55 to 65 bar), and the residence time will generally be in the range 0.3 to 5 hours, e.g. 0.5 to 2 hours. $C_4$ to $C_{12}$ alpha-olefin comonomer is added to control the density of the lower molecular weight copolymer fraction.

Preferably, the hydrogen concentration is selected so that the lower molecular weight copolymer fraction has the desired melt flow rate (MFR2). More preferably, the molar ratio of hydrogen to ethylene is between 0.1 and 1.5 mol/kmol, most preferably, between 0.2 and 1.0 mol/kmol.

The slurry is intermittently or continuously removed from the slurry phase reactor and transferred to a separation unit where at least the chain transfer agents (e.g. hydrogen) are separated from the polymer. The polymer containing the active catalyst is then introduced into a gas phase reactor where the polymerization proceeds in the presence of additional ethylene, comonomer(s) and optionally chain transfer agent to produce the higher molecular weight copolymer fraction. The polymer is intermittently or continuously withdrawn from the gas phase reactor and the remaining hydrocarbons are separated from the polymer.

The conditions in the gas phase reactor are selected so that the ethylene polymer has the desired properties. Preferably, the temperature in the reactor is between 50 and 100°C, preferably 60 to 85°C and the pressure is between 10 to 40 bar. The hydrogen to ethylene molar ratio ranges from preferably 0 to 2 mol/kmol, more preferably 0 to 1 mol/kmol, e.g. 0 to 0.5 mol/kmol or 0.5 to 1 mol/kmol depending on the desired end application. The alpha-olefin comonomer to ethylene molar ratio ranges from preferably 1 to 100 mol/kmol, more preferably 5 to 50 mol/kmol and most preferably 5 to 30 mol/kmol.

Comonomers which can be employed in the present invention include $C_{4-10}$ alpha olefins, preferably selected from but-1-ene, hex-1-ene, 4-methyl-pent-1-ene, hept-1-ene, oct-1-ene, and dec-1-ene e.g. but-1-ene and hex-1-ene. Preferably hexene or a mixture of hexene and butene is used in both slurry and gas phases. In one embodiment of the invention only one comonomer is used. The comonomer is e.g. hexene or butene, preferably hexene. Typically for film applications hexene is preferably used as the comonomer. In such film applications the $MFR_2$ value of the VLDPE composition is preferably less than 5, more preferably less than 2 g/10 min.

According to one embodiment, the VLDPE composition comprises only one comonomer and the density of the composition is below 920 $kg/m^3$ , e.g. below 915 $kg/m^3$.

According to another embodiment, the VLDPE composition comprises one comonomer and the density of the composition is below 920 $kg/m^3$ excluding a composition having a density of 915 $kg/m^3$ and $MFR_2$ of equal or more than 5 g/10 min.

In another embodiment of the invention the VLDPE composition comprises at least two comonomers, such that the composition is a terpolymer. The two comonomers are preferably a mixture of hexene and butene. In a preferred multistage process, the two or more, preferably two, comonomers can be added in the same polymerisation reactor or each comonomer in a different reactor. Thus, in case of a sequential reactors, such as slurry-gas phase reactor system, the two or more, suitably two, comonomers can both be added in the first reactor (e.g. slurry reactor) and in the subsequent reactor (e.g. the gas phase reactor).

Alternatively, the one or more, preferably two comonomers, can be added to only one of the multistage reactors, e.g. in case of loop and gas phase reactors, only one of these two reactors.

In a further embodiment the two comonomers are added each in different reactors, e.g. in a multireactor system, one comonomer is added in the first reactor, such as slurry, preferably loop, and the other comonomer is added only in the subsequent reactor, such as gas reactor.

Alternatively, one of the comonomers can be added in each reactor of a multireactor system, and the other comonomer(s) only in one reactor.

According to a further embodiment the VLDPE composition comprises at least two comonomers and the density of the composition is below 920 $kg/m^3$ excluding a composition having a density of 916 $kg/m^3$ and a $MFR_2$ of 3.8 g/10 min, a composition having a density of 915 $kg/m^3$ and a $MFR_2$ of 20 g/10 min, a composition having a density of 915 $kg/m^3$ and a $MFR_2$ of 14 g/10 min and a composition having a density of 918 $kg/m^3$ and a $MFR_2$ of 16 g/10 min.

In a still further embodiment the VLDPE composition comprises one comonomer and has a density of less than 920 $kg/m^3$, e.g. below 915 $kg/m^3$, and a $MFR_2$ of below 5 g/10 min, e.g. $MFR_2$ of 2 to 5 g/10 min for cast film and 0.01

to 2 g/10 min for blown film. In another embodiment, the VLDPE composition comprises at least two comonomers and has a density of less than 920 $kg/m^3$, e.g. below 915 $kg/m^3$, and a $MFR_2$ of below 5 g/10 min, e.g. $MFR_2$ of 2 to 5 g/10 min for cast film and 0.01 to 2 g/10 min for blown film.

As mentioned above the VLDPE composition can be used in various end applications. If desired it can be blended with other polymer compositions or additives in a known manner. Preferably, the resulting VLDPE polymer may be formed into films or used in extrusion coating as is known in the art. The extrusion coating process may be carried out using conventional extrusion coating techniques. Hence, the VLDPE polymer obtained from the polymerisation process is fed, typically in the form of pellets, optionally containing additives, to an extruding device. From the extruder the polymer melt is passed through a flat die to the substrate to be coated. Due to the distance between the die lip and the nip, the molten plastic is oxidised in the air for a short period, usually leading to an improved adhesion between the coating and the substrate. The coated substrate is cooled on a chill roll, after which it is passed to edge trimmers and wound up. The width of the line may vary between, for example, 500 to 1500 mm, e.g. 800 to 1100 mm, with a line speed of up to 1000 m/min, for instance 300 to 800 m/min. The temperature of the polymer melt is typically between 275 and 330°C.

Alternatively, the VLDPE polymer can be passed to a conventional film line and extruded and blown into polymer film.

The VLDPE can be used for forming a monolayer or multilayer film or extrusion coat in a manner known in the art.

The multimodal VLDPE composition of the invention can be extruded onto the substrate or blown as a film as a monolayer or as one layer in coextrusion. In either of these case it is possible to use the multimodal VLDPE composition as such or to blend it with other polymers, especially LDPE so that the blend contains from 0 to 50%, preferably from 10 to 40% and in particular 15 to 35% of LDPE, based on the weight of the final blend. Said LDPE preferably having a melt index of at least 3 g/10 min, preferably at least 6.5 g/10 min, particularly in extrusion coating. In such a case blending can occur in a post reactor treatment or just prior to the extrusion. The blend may be extruded as a monolayer or it may be coextruded with other polymer(s) as is known in the art.

In a multilayer extrusion coating or film process, the other layers may comprise any polymer resin having the desired properties and processabiiity. Examples of such polymers include: barrier layer PA (polyamide) and EVA; polar copolymers of ethylene, such as copolymers of ethylene and vinyl alcohol or copolymers of ethylene and an acrylate monomer; adhesive layers, e.g. ionomers, copolymers of ethylene and ethyl acrylate, etc; HDPE for stiffness; polypropylene for improving heat resistance and grease resistance; LDPE resins produced in a highpressure process; LLDPE resins produced by polymerising ethylene and alpha-olefin comonomers in the presence of a Ziegler, chromium or metallocene catalyst; and MDPE resins.

The substrate for extrusion coating is preferably a fibre based material such as paper or cardboard. The substrate may also be a film made of, for example, polyester, cellophane, polyamide, polypropylene or oriented polypropylene. Other suitable substrates include aluminium foil.

The coating will typically be 10 to 1000 μm in thickness, especially 20 to 100 μm. The specific thickness will be selected according to the nature of the substrate and its expected subsequent handling conditions. The substrate may be as thick as 10 to 1000 μm, e.g. 6 to 300 μm.

In addition to the polymer itself, the coatings or films of the invention may also contain antioxidants, process stabilizers, pigments and other additives known in the art. Moreover, the polyethylene polymer of the invention may be blended with other polymers while retaining sealing and mechanical properties suitable for the desired end-uses. Examples of such further polymers which may be used include LDPE, HDPE, MDPE, LLDPE, EMA, EBA, and EVA. Typically, up to about 50% wt of the overall polymer may be constituted by much further polymers, more preferably up to 30% wt in the case of HDPE, MDPE or LLDPE.

The polymer films formed from the polymer of the invention exhibit very high dart drop values from 1000 to 1700 g (measured according ISO 7765-1, method "A using 40 micron blown film samples) depending on the used comonomer(s), i.e. with at least two, e.g. terpolymers, values of 1000 to 1500 g is obtained and with the use of only one comonomer, e.g. hexane, values of 1500-1700 are typically obtained. Normally such high values are obtained mainly for unimodal single site grades.

Also good hot-tack and/or tear properties are obtained.

Accordingly, the seal which is formed between the surfaces to be sealed is put under load while it is still warm. This means that the hot-tack properties of the polyethylene are crucial to ensure a strong seal is formed even before cooling. All polymers have a window within which sealing may occur, i.e. in which the extrudate becomes partly molten. Traditionally this sealing window has been rather narrow meaning that temperature control during the heat sealing process is critical. The polymers of the invention allow a broader sealing window so allowing the sealing operation to take place at lower temperature and ensuring that temperature control during heat sealing is less important. By operating at lower temperature there are the benefits that the article to be sealed is not exposed to high temperature and any other component of the extrusion coating or film which may not be involved in sealing are also not exposed to high temperature. There are also economic advantages since lower temperatures are of course cheaper to generate and maintain.

The present invention will now be illustrated further by the following non-limiting Examples

**Experimental:**

Melt flow rate (MFR, sometimes also referred to as melt index) according to ISO 1133, at 190°C. The load used in the measurement is indicated as a subscript, i.e. $MFR_2$ denotes the MFR measured under 2.16 kg load.

The molecular weight averages and molecular weight distribution were measured on a Waters Alliance GPCV2000 SEC instrument with on-line viscometer at 140 degrees Celsius using 1,2,4-trichlorobenzene (TCB) stabilized with 2,6-di-tertbutyl-4-methylphenol (BHT) as aneluent. A set of two mixed bed and one $10^7$ Å TSK-Gel columns from TosoHaas was used and the system was calibrated with NMWD polystyrene standards (from Polymer laboratories). The analyses were carried out following the principles of standard test methods ISO 16014-2:2003 and ISO 16014-4:2003.

Density was determined according to ISO 1183-1987.

But-1-ene and hex-1-ene contents of the polymers were determined by $^{13}C$ NMR.

Melting points (melting temperature) and crystallinity were determined by DSC (Differential Scanning Calorimetry) using Mettler Toledo DSC822 measurement: melting at 180°C for 5 min, cooling 10°C per min to 0°C and when heated from 0°C to 180°C heat increase of 10°C per min.

Rheology of the polymers was determined using Rheometrics RDA II Dynamic Rheometer. The measurements were carried out at 190°C under nitrogen atmosphere. The measurements gave storage modulus (G') and loss modulus (G") together with absolute value of complex viscosity (η*) as a function of frequency (ω) or absolute value of complex modulus (G*).

$$\eta^* = \sqrt{(G'^2 + G''^2)}/\omega$$

$$G^* = \sqrt{(G'^2 + G''^2)}$$

According to Cox-Merz rule complex viscosity function, η*(ω) is the same as conventional viscosity function (viscosity as a function of shear rate), if frequency is taken in rad/s. If this empirical equation is valid absolute value of complex modulus corresponds shear stress in conventional (that is steady state) viscosity measurements. This means that function η*(G*) is the same as viscosity as a function of shear stress.

In the present method both viscosity at a low shear stress or η* at a low G* (which serve as an approximation of so called zero viscosity) and zero shear rate viscosity were used as a measure of average molecular weight. On the other hand, shear thinning, that is the decrease of viscosity with G*, gets more pronounced the broader is the molecular weight distribution. This property can be approximated by defining a so-called shear thinning index, SHI, as a ratio of viscosities at two different shear stresses. In the examples below the shear stresses (or G*) 1 and 100 kPa were used. Thus:

$$SHI_{1/100} = \eta^*_1/\eta^*_{100}$$

where
$\eta^*_1$ is the shear rate viscosity at 1kPa
$\eta^*_{100}$ is complex viscosity at G* = 100 kPa

As mentioned above storage modulus function, G'(ω), and loss modulus function, G''(ω), were obtained as primary functions from dynamic measurements. The value of the storage modulus at a specific value of loss modulus increases with broadness of molecular weight distribution. However this quantity is highly dependent on the shape of molecular weight distribution of the polymer. In the examples the value of G' at G" = 5 kPa was used.

Dart-drop is measured using ISO 7765-1, method "A". A dart with a 38 mm diameter hemispherical head is dropped from a height of 0.66 m onto a film clamped over a hole. If the specimen fails, the weight of the dart is reduced and if it does not fail the weight is increased. At least 20 specimens are tested. The weight resulting in failure of 50% of the specimens is calculated.

**Catalyst Preparation Example 1:**

134 grams of a metallocene complex (bis (n-butyldicyclopentadienyl) hafnium dichloride supplied by Witco as TA02823, containing 0.36 % by weight Hf) and 9.67 kg of a 30% solution of methylalumoxane (MAO) in toluene (supplied by Albemarle) were combined and 3.18 kg dry, purified toluene was added. The thus obtained complex solution was added on 17 kg silica carrier Sylopol 55 SJ by Grace. The complex was fed very slowly with uniform spraying during 2 hours. Temperature was kept below 30°C. The mixture was allowed to react for 3 hours after complex addition at 30°C. The thus obtained solid catalyst was dried by purging it with nitrogen at 50°C for three hours and recovered.

**Catalyst Preparation Example 2:**

Benzylation of $(n\text{-}BuCp)_2HfCl_2$ by using benzyl potassium

*Synthesis of benzyl potassium*

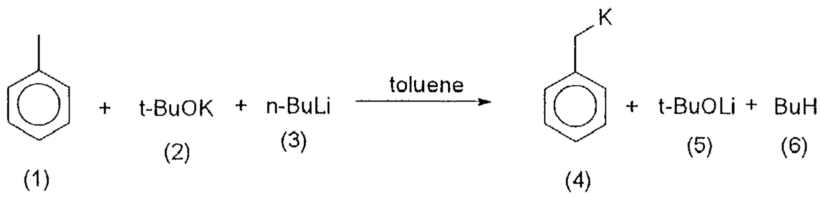


First, 200 mmol of potassium tert-butoxide (Fluka 60100, 97%) was dissolved in 250 ml toluene. Next, 200 mmol of n-butyllithium (~2.5 M solution in hexanes, Aldrich) was added during 1.5 hours. The mixture turned from white into red. The mixture was stirred for 2.5 days. It was then filtrated and washed with toluene (5x100 ml) and pentane (50 ml). As a result 21.7 grams benzylpotassium was obtained as brick red, toluene insoluble solid. Yield was 83%.
$^1$H-NMR in THF-$d_8$, δ(ppm): 6.01 (m, 2H), 5.10 (d, 2H), 4.68 (t, 1H), 2.22 (s, 2H). Chemical shifts are referenced to the solvent signal at 3.60 ppm. $^{13}$C-NMR in THF-$d_8$, δ(ppm): 152.3, 129.4, 110.1, 94.3, 51.6. Chemical shifts are referenced to the solvent signal at 66.50 (the middle peak).

Synthesis of $(n\text{-}BuCp)_2Hf(CH_2Ph)_2$

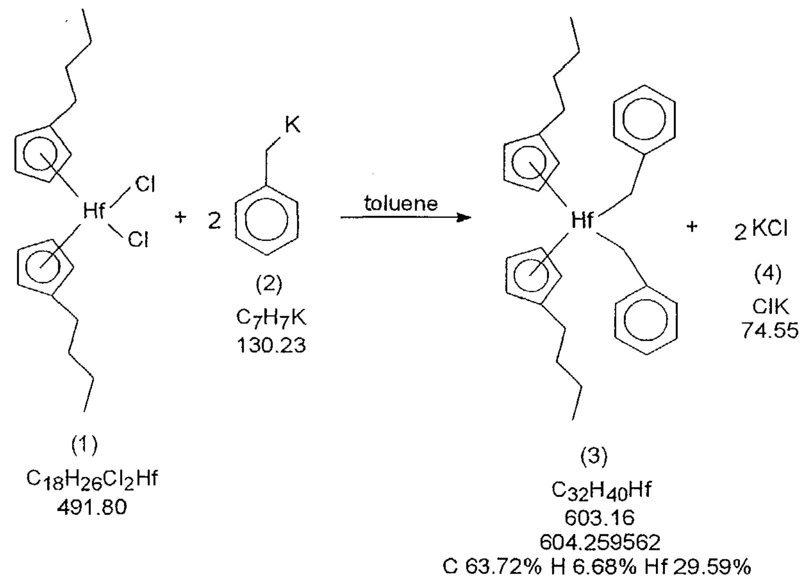

6.87 mmol bis(n-butylcyclopentadienyl)hafnium dichloride and 150 ml of toluene were mixed at 20°C to give brown-grey solution. Then, 14.74 mmol of benzylpotassium prepared as described above was added to the solution at 0°C as a solid during 10 minutes. The cooling bath was removed and the mixture was stirred at 20°C for 3 hours. Solvent was removed under reduced pressure and the remainder was extracted with 3 x 30 ml of pentane. The solvent was removed from the combined pentane solutions giving 3.86 g of $(n\text{-}BuCp)_2Hf(CH_2Ph)_2$ as a yellow liquid. Yield 93%.
$^1$H-NMR in toluene-$d_8$, δ(ppm): 7.44 (t, 4H), 7.11 (d, 4H), 7.08 (t, 2H), 5.75 (m, 4H), 5.67 (m, 4H), 2.33 (t, 4H), 1.77 (s, 4H), 1.54 (m, 4H), 1.43 (m, 4H), 1.07 (t, 6H). Chemical shifts are referenced to the solvent signal at 2.30 ppm (the middle peak). $^{13}$C-NMR in toluene-$d_8$, δ(ppm) : 152.7, 137.5, 128, 126.8, 121.6, 112.7, 110.5, 65.3, 34.5, 29.7, 22.8, 14.1. Chemical shifts are referenced to the solvent signal at 20.46 (the middle peak). Elemental analysis: C 63.57% (calc. 63.72), H 6.79% (calc. 6.68), Hf 29.78% (calc. 29.59), K <0.1% (calc. 0).

Catalyst Support and Activation

The metallocene was supported and activated as in Catalyst Preparation Example 1, except that the 134 grams of $(n\text{-}BuCp)_2HfCl_2$ was replaced by 164 grams of $(n\text{-}BuCp)_2Hf(CH_2Ph)_2$ prepared as described above and as the silica carrier SP9-391 (supplied by Grace) was used.

**Example 1**

A continuosly operated loop reactor having a volume 500 $dm^3$ was operated at 85°C temperature and 58 bar pressure. Into the reactor were introduced propane diluent, ethylene, but-1-ene comonomer, hydrogen and the polymerisation catalyst 1 prepared according to Catalyst example 1. In such amounts that the ethylene concentration in the liquid phase of the loop reactor was 6 mol-%, the ratio of hydrogen to ethylene was 0,64 mol/kmol, the ratio of but-1-ene to ethylene was 185 mol/kmol and the polymer production rate in the reactor was 28 kg/h. The thus formed polymer had a melt index $MFR_2$ of 115 g/10 min and a density of 936 $kg/m^3$.

The slurry was intermittently withdrawn from the reactor by using a settling leg and directed to a flash tank operated at a temperature of about 50°C and a pressure of about 3 bar.

From the flash tank the powder, containing a small amount of residual hydrocarbons, was transferred into a gas phase reactor operated at 75°C temperature and 20 bar pressure. Into the gas phase reactor also introduced additional ethylene, but-1-ene comonomer and nitrogen as inert gas in such amounts that the ethylene concentration in the circulating gas was 22% by mole, the ratio of hydrogen to ethylene was about 1.1, the ratio of but-1-ene to ethylene was 55 mol/kmol and the polymer production rate was 30 kg/h.

The production split between the loop and gas phase reactors was thus 48/52.

**Example 2**

The procedure of Example 1 was repeated except that the process conditions were adjusted as shown in Table 1. The polymer collected from the gas phase reactor was stabilised by adding to the powder 460 ppm Irganox B561. The stabilised polymer was the extruded and pelletised under nitrogen atmosphere with CIM90P extuder, manufactured by Japan Steel Works. The melt temperature was 217 °C, throughput 280 kg/h and the specific energy input (SEI) was 200 kWh/t.

**Example 3**

The procedure of Example 1 was repeated except that the process conditions were adjusted as shown in Table 1.

**Example 4**

The procedure of Example 2 was repeated except that the process conditions were adjusted as shown in Table 1.

**Example 5**

The procedure of Example 2 was repeated except that the process conditions were adjusted as shown in Table 1.

The table 1: Polymerisation conditions and the productproperties of the obtained products of examples 1-5

| Polymerization conditions | Unit | Ex 1 | Ex 2 | Ex 3 | Ex 4 | Ex 5 |
|---|---|---|---|---|---|---|
| C2 loop | mol-% | 6 | 6,6 | 6,5 | 6,2 | 6,1 |
| H2/C2 loop | mol/kmol | 0,64 | 0,63 | 0,63 | 0,47 | 0,48 |
| C4/C2 loop | mol/kmol | 185 | 183 | 176 | 0 | 0 |
| C6/C2 loop | mol/kmol | 0 | 0 | 0 | 142 | 145 |
| $MFR_2$ loop | g/10 min. | 115 | 120 | 130 | 95 | 90 |
| Density loop | kg/m3 | 936 | 936 | 936 | 943 | 942 |
| Prod. rate | loop kg/h | 28 | 28 | 28 | 35 | 35 |
| C2 GPR | mol-% | 22 | 23 | 24 | 44 | 47 |
| H2/C2 GPR | mol/kmol | 1,1 | 1,2 | 1,7 | 0,3 | 0,26 |
| C4/C2 GPR (1-butene) | mol/kmol | 55 | 48 | 45 | 0 | 0 |
| C6/C2 GPR (1-hexene) | mol/kmol | 0 | 0 | 0 | 15 | 11 |
| Prod. rate GPR | kg/h | 30 | 30 | 30 | 48 | 51 |
| Density in GPR (calc.) | $kg/m^3$ | 886 | 895 | 895 | 880 | 890 |
| Prod. split loop/GPR | | 48/52 | 49/51 | 49/51 | 45/55 | 42/58 |
| Irganox B561 | ppm | - | 460 | - | 1600 | 1600 |
| CIM90P tliroughput | kg/h | - | 280 | - | 280 | 280 |
| CIM90P extruder melt temp. | °C | - | 217 | - | 237 | 240 |
| CIM90P SEI (specific energy input) | kWh/t | - | 200 | - | 230 | 240 |
| $MFR_2$, final product, powder | g/10 min | 6.6 | 10 | 18 | 0.8 | 0.65 |
| Density, final product , powder | $kg/m^3$ | 910 | 915 | 915 | 908 | 912 |

Pellet properties Table 2

| | Unit | Ex 1 | Ex 2 | Ex 3 | Ex 4 | Ex 5 |
|---|---|---|---|---|---|---|
| Density, | $kg/m^3$ | 910 | 912 | 915 | 907 | 910 |
| $MFR_2$, | g/10 min | 6 | 10 | 18 | 0.78 | 0.65 |
| $M_w$ | g/mol | 78300 | 67 800 | 56 100 | 141 000 | 142000 |
| $M_n$ | g/mol | 21 500 | 19 600 | 17 900 | 27 200 | 28 600 |
| $M_w/M_n$ | | 3.6 | 3.5 | 3.1 | 5.2 | 5 |
| $\eta_{1kPa}$ | Pa.s | 1430 | 780 | 300 | 11 200 | 13 400 |
| $SHI_{1/100}$ | | 2.7 | 2.3 | 2.1 | 4.8 | 4.1 |
| $G'_{5kPa}$ | | 780 | 630 | 600 | 1070 | 990 |
| Density pellet | $kg/m^3$ | 911.8 | 915 | 915 | 907.9 | 912.1 |
| 1-butene content | wt-% | 10.5 | 8.1 | 8.1 | - | - |
| 1-hexene content | wt-% | - | - | - | 13.8 | 10.9 |
| $T_m$ | °C | 115.5 | 115.8 | 117.2 | 121.6 | 120.8 |
| Crystallinity | % | 31.1 | 36.7 | 35.1 | 28.1 | 31.6 |
| Applications | | EC | EC | EC | film | film |

Examples 6 to 11 were carried out according to procedures described in Example 1 using the conditions etc in the table 3 below. Examples 7 to 11 employed catalyst 2.

Table 3

| Example | 6 | 7 | 8 | 9 | 10 | 11 |
|---|---|---|---|---|---|---|
| | Cat 1 | Cat 2 | Cat 2 | Cat 2 | Cat 2 | Cat 2 |
| C2 loop mol-% | 7,2 | 7,5 | 6,7 | 7,1 | 6,3 | 7 |
| H2/C2 loop mol/kmol | 0,64 | 0,55 | 0,46 | 0,48 | 0,62 | 0,42 |
| C4/C2 loop mol/kmol | 161 | 149 | 165 | 138 | 154 | 118 |
| C6/C2 loop mol/kmol | 0 | 0 | 0 | 0 | 0 | 0 |
| MFR2 loop g/10 min. | 130 | 105 | 140 | 115 | 260 | 80 |
| Density loop kg/m3 | 936 | 934 | 935 | 936 | 935 | 935 |
| Prod. rate loop kg/h | 20 | 25 | 35 | 34 | 27 | 35 |
| C2 GPR mol-% | 20 | 47 | 43 | 39 | 40 | 40 |
| H2/C2 GPR mol/kmol | 1,3 | 1,1 | 1,3 | 1,1 | 0,98 | 0,4 |
| C4/C2 GPR mol/kmol | 0 | 0 | 0 | 0 | 0 | 0 |
| C6/C2GPR mol/kmol | 12,8 | 20 | 20 | 20 | 21 | 19 |
| Prod. rate GPR kg/h | 20 | 25 | 34 | 35 | 28 | 35 |
| Prod. split loop/GPR | 50/50 | 50/50 | 50/50 | 49/51 | | 49/51 |
| Irganox B561 ppm | - | - | 450 | 475 | - | 1560 |
| CIM90P throughput kg/h | - | - | 285 | 282 | - | 282 |
| CIM90P melt temp. °C | - | - | 170 | 174 | - | 185 |
| CIM90P SEI kWh/t | - | - | 131 | 147 | - | 192 |
| Density powder kg/$m^3$ | 914 | 914 | 912 | 912 | 913.5 | 912 |
| | powder | powder | | | powder | |

Pellet properties Table 4

| Property | Unit | | | | | | |
|---|---|---|---|---|---|---|---|
| | Ex. | 6 | 7 | 8 | 9 | 10 | 11 |
| Application | | EC | EC | EC | EC | EC | Film |
| $MFR_2$ | g/10 min | 9.5 | 9.4 | 20 | 11 | 17 | 1 |
| $M_w$ | g/mol | 70 700 | | 59 700 | 70 000 | 61 600 | |
| $M_n$ | g/mol | 18 900 | | 13 600 | 18 400 | 11 600 | |
| $M_w/M_n$ | | 3.7 | | 4.4 | 3.8 | 5.3 | |
| $\eta_{1kPa}$ | Pa.s | 970 | 880 | 350 | 730 | | |
| $SHI_{1/100}$ | | 3.3 | 3.0 | 2.7 | 3.1 | | |
| $G'_{5kPa}$ | | 970 | 900 | 840 | 930 | | |
| Density pellet | kg/$m^3$ | 914 | 914.8 | 914.6 | 914.8 | 913.5 | 913.5 |
| 1-butene content | wt-% | 2.1 | 2.1 | 2.7 | n.a.. | 2.4 | n.a. |
| 1-hexene content | wt-% | 9.5 | 8.7 | 8.3 | n.a | 12.5 | n.a. |

Table continued

| Property | Unit | | | | | | |
|---|---|---|---|---|---|---|---|
| | Ex. | 6 | 7 | 8 | 9 | 10 | 11 |
| $T_m$ | °C | 117.3 | 116.7 | 116.7 | 116.4 | | |
| Crystallinity | % | 36.4 | 35.5 | 37.8 | 37.1 | | |

## Claims

1. A multimodal copolymer of ethylene comprising at least (i) a lower molecular weight fraction of a copolymer of ethylene and at least one alpha-olefin comonomer and (ii) a higher molecular weight fraction of a copolymer of ethylene and at least one alpha-olefin comonomer, wherein said copolymer has a density below 920 kg/$m^3$.

2. A copolymer as claimed in claim 1 having a density of less than 915 kg/$m^3$.

3. A copolymer as claimed in claim 1 having a density of 912 kg/$m^3$ or less.

4. A copolymer as claimed in any one of claims 1 to 3 having an MFR2 of 0.5 to 20 g/10min.

5. A copolymer as claimed in claim 4 having an MFR2 of 0.8 to 15.

6. A copolymer as claimed in any one of claims 1 to 5 wherein the MFR2 of the lower molecular weight fraction is 50 to 300 g/10min.

7. A copolymer as claimed in any one of claims 1 to 6 wherein the weight ratio of LMW fraction to HMW fraction is 40: 60 to 60:40.

8. A copolymer as claimed in any one of claims 1 to 7 wherein the comonomer employed in each fraction is hexene, butene or a mixture thereof.

9. A copolymer as claimed in claim 8 wherein the copolymer employed in both LMW and HMW fractions is hexene.

10. A copolymer as claimed in claim 8 wherein a mixture of hexene and butene is used as the comonomer mixture.

11. A copolymer as claimed in claim 10 wherein a mixture of hexene and butene is used as the comonomer mixture in both LMW and HMW components.

12. A process for preparing an ethylene copolymer as claimed in any one of claims 1 to 11 wherein (a) the LMW fraction (i) is produced by polymerising ethylene with at least one alpha-olefin comonomer in the presence of a polymerisation catalyst and (b) the HMW fraction (ii) is produced by polymerising ethylene with at least one alpha-olefin comonomer in the presence of a polymerisation catalyst, to obtain a copolymer having density of less than 920 kg/$m^3$, and optionally extruding the obtained composition to form polymer pellets.

13. A process as claimed in claim 12 wherein the copolymer is prepared in a continuous process.

14. A process as claimed in claim 13 wherein step (a) takes place in the slurry phase and step (b) in the gas phase.

15. A process as claimed in claim 14 wherein said slurry phase takes place in a loop reactor.

16. A process as claimed in any one of claims 12 to 15 wherein the same polymerisation catalyst is used to form both fractions.

17. A process as claimed in any one of claims 12 to 16 wherein the HMW fraction (ii) is produced in the presence of the LMW fraction and the polymerisation catalyst used in step (a).

18. A process as claimed in claim 12 to 17 wherein said catalyst is a single site catalyst.

**19.** A process for the preparation of a polyethylene copolymer comprising:

(I) in a first stage polymerising ethylene and at least one $C_{4-10}$-alpha olefin in the presence of a single site catalyst in the slurry phase so as to form a lower molecular weight component;
transferring the resulting reaction mixture to a gas phase reactor and;
(II) polymerising ethylene and at least one $C_{4-10}$-alpha olefin in the gas phase in the presence of the reaction mixture obtained from state (I) so as to form a higher molecular weight component;

so as to yield a multimodal polyethylene copolymer having a density of less than 920 kg/$m^3$.

**20.** A film, extrusion coated substrate or injected moulded article comprising a copolymer as claimed in any one of claims 1 to 11.

**21.** A film as claimed in claim 20 wherein said film is a blown film comprising a copolymer having an $MFR_2 \leq 2$ g/10 min.

**22.** A film as claimed in claim 20 wherein the film is a cast film comprising a copolymer an $MFR_2$ of 2-5 g/10 min.

European Patent Office

# EUROPEAN SEARCH REPORT

Application Number
EP 04 25 8117

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/171501 A1 (KALLIO KALLE ET AL) 11 September 2003 (2003-09-11) * claim 17; examples 3-7; table 1 * ----- | 1-22 | C08F297/08 C08F297/06 C08F210/16 C08L23/08 |
| X | WO 01/62847 A (BOREALIS TECHNOLOGY OY; VAEHAELAE, MARTTI; SALMINEN, HANNU; LEHTINEN,) 30 August 2001 (2001-08-30) * claims 1,15 * ----- | 1-22 | |
| X | EP 1 327 664 A (BOREALIS TECHNOLOGY OY) 16 July 2003 (2003-07-16) * paragraph [0048] - paragraph [0052] * ----- | 1-22 | |

TECHNICAL FIELDS SEARCHED (Int.Cl.7)
C08F
C08L

The present search report has been drawn up for all claims

1

| Place of search | Date of completion of the search | Examiner |
|---|---|---|
| Munich | 11 May 2005 | Lippert, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 04 25 8117

This annex lists the patent family members relating to the patent documents cited in the above-mentioned European search report. The members are as contained in the European Patent Office EDP file on
The European Patent Office is in no way liable for these particulars which are merely given for the purpose of information.

11-05-2005

| Patent document cited in search report | | Publication date | Patent family member(s) | | | Publication date |
|---|---|---|---|---|---|---|
| US 2003171501 | A1 | 11-09-2003 | AU | 6622001 | A | 14-01-2002 |
| | | | CN | 1440330 | A | 03-09-2003 |
| | | | EP | 1294564 | A1 | 26-03-2003 |
| | | | WO | 0202323 | A1 | 10-01-2002 |
| | | | ZA | 200300246 | A | 21-01-2004 |
| WO 0162847 | A | 30-08-2001 | FI | 20000397 | A | 21-08-2001 |
| | | | AU | 4071101 | A | 03-09-2001 |
| | | | CA | 2400662 | A1 | 30-08-2001 |
| | | | CN | 1423677 | A ,C | 11-06-2003 |
| | | | EP | 1265959 | A1 | 18-12-2002 |
| | | | WO | 0162847 | A1 | 30-08-2001 |
| | | | NO | 20023941 | A | 09-10-2002 |
| | | | US | 2003042658 | A1 | 06-03-2003 |
| EP 1327664 | A | 16-07-2003 | EP | 1327664 | A1 | 16-07-2003 |
| | | | AU | 2002363897 | A1 | 24-07-2003 |
| | | | WO | 03057776 | A1 | 17-07-2003 |
| | | | US | 2003144390 | A1 | 31-07-2003 |

EPO FORM P0459

For more details about this annex : see Official Journal of the European Patent Office, No. 12/82